# EUROPEAN PATENT SPECIFICATION

(11) **EP 3 881 927 B1**
(45) Date of publication and mention of the grant of the patent: **15.07.2026**
(21) Application number: 20163848.3
(22) Date of filing: 18.03.2020
(51) Int. Cl.: B01D 65/02

(54) **CLEANING-IN-PLACE METHOD AND FILTER DEVICE**
VERFAHREN ZUR REINIGUNG VOR ORT UND FILTERVORRICHTUNG
PROCÉDÉ DE NETTOYAGE SUR PLACE ET DISPOSITIF DE FILTRE

(43) Date of publication of application: 22.09.2021
(73) Proprietor: Grundfos Holding A/S, 8850 Bjerringbro (DK)
(72) Inventor: Carøe Aarestrup, Jan, 8850 Bjerringbro (DK); Dominiak, Dominik, 8850 Bjerringbro (DK)
(74) Representative: Patentanwälte Hemmer Lindfeld Frese Partnerschaft mbB

(56) References cited:
- EP-A1- 2 745 916
- WO-A1-2019/183221
- CN-A- 1 994 537
- US-A1- 2017 209 834

## Description

The invention refers to a cleaning-in-place method using a cross flow for cleaning a membrane filter system as well as to a filter device including at least one membrane.

Membrane filter systems need to be cleaned from time to time. In certain intervals backwash cycles are carried out and in greater intervals cleaning cycles, so called cleaning-in-place cycles are required, the cleaning-in-place cycles using a cross flow along the entrance side of the membrane. During the cleaning-in-place cycle the production of the filter system has to be stopped. Therefore, it is desired to reduce the necessary time for the cleaning-in-place cycle. Furthermore, the cleaning-in-place requires energy and chemicals. For cost optimization it is desired to reduce the use of energy and chemicals. On the other hand, an optimal cleaning result should be ensured, too.

WO 2019/183221 A1 discloses a system where a controller switches between a backwashing without a cleaning agent and backwashing using a cleaning agent based on data measured by a sensor. US 2017/209834 A1 discloses using a combination of triggered backwashing and triggered chemical cleaning-in-place using cleaning agents. CN1994 537A teaches a method for cleaning a membrane filtration device wherein forward flushing and back flushing are carried out simultaneously until the flux of a membrane is restored. EP 2 745 916 A1 discloses a method for cleaning a membrane in a closed loop cleaning flow passing the membrane, wherein the cleaning result is detected by measuring chemical properties of the closed loop cleaning flow.

The present invention is based on a cleaning-in-place method using cleaning-in-place flow in form of a cross flow along the entrance side of a membrane. It is object of the invention to improve a cleaning-in-place method using a cross flow such that it achieves an optimal cleaning result in a more economic way. This object is achieved by a cleaning-in-place method having the features defined in claim 1 and by a filter device having the features defined in claim 8. Preferred embodiments are defined in the dependent sub claims, in the following description and the accompanying drawings.

The cleaning-in-place method according to the invention is provided for cleaning a membrane filter system. The cleaning-in-place may be carried out by use of clean water and certain chemicals or cleaning agents. The cleaning-in-place is carried out by a cleaning-in-place flow in form of a cross flow flowing along the entrance or feed side of the membrane, i.e. from the feed entry to the retentate outlet of the filter system, or vice versa. Such cleaning-in-place flow may be produced by a cleaning-in-place pump feeding a cleaning solution through the filter system, preferably in a closed-loop. It is the aim of the invention to terminate the cleaning-in-place cycle if the desired cleaning result of the membrane is achieved to avoid a longer duration of the cleaning-in-place cycle than necessary.

In a first method step the cleaning-in-place cycle is started. The point in time for starting the cleaning-in-place cycle may be found in conventional manner, i.e. the cleaning-in-place cycle is started when a cleaning-in-place is required. The need of cleaning-in-place may for example be detected as disclosed in EP 2 985 069 B1. According to the invention for detecting the cleaning result backwash cycles are carried out during this cleaning-in-place cycle. The backwash cycles may be carried out in intervals, predefined or varying intervals, during the cleaning-in-place cycle. During these backwash cycles at least one backwash hydraulic parameter of the filter is determined. The backwash hydraulic parameter is a parameter determined by measuring at least one backwash variable in the backwash flow. The backwash flow is produced by a backwash pump. The backwash flow is passing through the filter membrane from the permeate side towards the feed side of the membrane. According to the invention the cleaning-in-place cycle is terminated when the determined backwash hydraulic parameter meets a certain criterion. This may be a criterion representing the cleaning result. This means according to the invention the backwash cycles carried out during the cleaning-in-place cycle are used to measure or detect the achieved cleaning result. This allows to detect the achieved cleaning result and to terminate the cleaning-in-place cycle just when the desired cleaning result is achieved. By this an unnecessarily long interruption of production for carrying out the cleaning-in-place cycle can be avoided.

The backwash cycles are carried out without interrupting the cleaning-in-place cycle, i.e. simultaneously with the cleaning-in-place cycle. The cleaning-in-place flow just results in an increased counter pressure for the backwash, but apart from that does not influence the measurement of the hydraulic parameters in the backwash flow.

A further advantage of the method according to the invention is that the method can easily be carried out in existing filter systems, since preferably it does not require any physical change of the filter system. All necessary pumps and sensors, usually are present in a conventional membrane filter system provided for backwashing and cleaning-in-place. To implement the method according to the invention only a respective change of the control controlling the backwash cycles and the cleaning-in-place cycles would be necessary.

According to the invention the cleaning-in-place cycle is a chemical cleaning using at least one cleaning agent. Also, a combination of different cleaning agents or chemicals, respectively may be used. Furthermore, it may be possible to adjust the temperature of the cleaning solution or agent. On basis of these variables a certain recipe for the cleaning-in-place cycle may be set. This allows an optimization of the cleaning-in-place cycle to achieve an optimal cleaning result at minimum costs.

According to a preferred embodiment of the invention for determining the backwash hydraulic parameter at least one respective backwash variable is measured or detected for a period of time and the backwash hydraulic parameter is sampled when the detected parameter has stabilized, i.e. when the measured variables are substantially constant. The decision whether the backwash hydraulic parameter meets the certain criterion is made on basis of the value sampled or determined after the parameter became stable. Then the backwash cycle may be terminated. Thus, for determining the parameter it is waited until the parameter or value becomes stable, then the value of the parameter is sampled and this sampled value is used for further analysis and the decision whether to terminate the cleaning-in-place cycle.

According to a possible embodiment of the invention the cleaning-in-place cycle is terminated, if a deviation of a currently determined or sampled value of said backwash hydraulic parameter from a value of the same backwash hydraulic parameter determined or sampled in a previous backwash in the same cleaning-in-place cycle exceeds a predefined deviation limit value. During the cleaning-in-place cycle several backwash cycles are carried out in intervals. In each backwash cycle the same backwash hydraulic parameter or the same backwash hydraulic parameters are determined or sampled, preferably after said parameter became stable. Then the values of those backwash hydraulic parameters are compared among each other to monitor the change of the backwash hydraulic parameters from one backwash cycle to the next backwash cycle. Preferably, the cleaning-in-place cycle is terminated if the backwash hydraulic parameter is approaching a constant value over the serval backwash cycles. This may be detected by considering a predefined deviation limit value. If the deviation reaches this predefined limit value the backwash hydraulic parameter may be regarded as being constant. This means the deviation preferably becomes smaller than the predefined deviation limit value. In view of this the definition exceeding a predefined deviation value may also imply that the deviation falls below the deviation limit value.

According to a further possible embodiment of the invention during the cleaning-in-place cycle at least one characteristic value characterizing the efficiency of the cleaning-in-place process is determined. The detection of such a characteristic value allows to compare the efficiency of different recipes for the cleaning-in-place cycle to choose the most efficient recipe for the cleaning-in-place.

For example several cleaning-in-place cycles may be carried out with changing at least one setting of the cleaning-in-place recipe, i.e. with changing the recipes between the different cleaning-in-place cycles. The different recipes for the cleaning-in-place may vary for example in the chemicals used and/or a temperature setting. During each cleaning-in-place cycle a characteristic value characterizing the efficiency may be determined or detected. Then, the efficiencies of the different recipes are compared to determine the most economic recipe for the cleaning-in-place cycle. In the following the cleaning-in-place cycles this most economic recipe may be used. Such method step allows to carry out an optimization of the cleaning-in-place recipe for a certain filter system taking into consideration the properties and ambient conditions of the respective membrane filter system. These properties and conditions may change over time. By carrying out the afore described optimization process it is possible to currently optimize the cleaning-in-place cycle by continuously determining the most efficient cleaning-in-place recipe.

The characteristic value characterizing the efficiency of the cleaning-in-place process may for example be energy consumption, time and/or the amount of cleaning agent needed. Thereby also the costs may be regarded. It is possible to calculate a characteristic value on basis of all these factors of influence to carry out an optimization process for finding the most cost-effective cleaning-in-place recipe.

The backwash hydraulic parameter detected or sampled during the backwash cycle is a parameter characterizing the permeability of the membrane filter. The permeability of the membrane filter indicates the cleaning result. When the permeability reaches its maximum the optimum cleaning result is achieved. Since over time the permeability of the membrane may decrease the maximum permeability which can be reached preferably is assumed if the backwash hydraulic parameter and, thus, the permeability becomes constant.

The backwash hydraulic parameter is determined in real time during the backwash operation or the backwash cycle, respectively, preferably by measurement of at least one backwash varaiable. Thus, the achieved cleaning result can be detected in real time allowing to terminate the cleaning-in-place cycle as soon as the desired cleaning result is achieved.

According to the method the backwash hydraulic parameter is determined at least on basis of the flow and/or transmembrane pressure measured during the backwash cycle in the membrane filter system. The backwash flow may be detected by a suitable flow sensor or, alternatively, by a backwash pump generating the backwash flow. Furthermore, it may be possible to carry out a flow control by the pump to adjust or set the backwash flow. In an alternative embodiment it would be possible to set a backwash pressure and to measure changes in flow. The transmembrane pressure may be detected by respective pressure sensors on both sides of the membrane. On basis of the transmembrane pressure and the flow the permeability or a value characterizing the permeability can be calculated. The flow, pressure and membrane surface area, which is constant, can be combined into a characteristic value characterizing the permeability of the membrane. This characteristic value, furthermore, may, optionally, be corrected with the temperature to consider a temperature corrected permeability.

According to a further preferred embodiment during the backwash cycle the flow is ramped to a certain value and then ramped back to zero, wherein preferably the flow is maintained constant for a certain period before ramping back to zero. However, it is not necessary to keep the flow constant for a certain time. The ramp of the flow may be achieved by a respective control of a backwash pump. Ramping the flow produces a corresponding transmembrane pressure profile containing useful information. Preferably, the tracked backwash hydraulic parameter (e.g. permeability) is independent of changes in flow and pressure.

The intervals between two backwash cycles carried out during the cleaning-in-place cycle may be predefined, and, preferably, equal. Alternatively, the intervals between two backwash cycles in the cleaning-in-place cycle may be variable. This allows to adjust the intervals on basis of the change of the hydraulic parameter in previous backwash cycles during the cleaning-in-place cycle. Usually, the value of the permeability detected will be low in the beginning of the cleaning-in-place cycle, then may increase rapidly and at the end the increase may slow down. To precisely detect the point in time to terminate the cleaning-in-place cycle it may, therefore, be advantageous to start with longer intervals between two backwash cycles and to shorten the intervals during progress of the cleaning-in-place cycle. The shortening of the intervals may be carried out on basis of the detected backwash hydraulic parameter, for example on basis of the change of a gradient of a backwash hydraulic parameter curve created from the detected values of the backwash hydraulic parameter.

Beside the described cleaning-in-place method a filter device according to the following description is subject of the present invention. Preferred embodiments described with reference to the method may also be regarded as preferred embodiments of the filter device and vice versa.

The filter device according to the invention includes at least one membrane and equipment for backwashing the membrane and for cleaning-in-place the membrane. Preferably, the filter device comprises a backwash pump and a cleaning-in-place pump as well as necessary means for adding cleaning agents into a cleaning-in-place flow, and for example a cleaning-in-place tank. Furthermore, the filter device comprises a control device which is designed for controlling at least the cleaning-in-place and the backwash of the filter. The control device in particular may control respective pumps for generating a predefined cleaning-in-place flow and/or backwash flow. The control device according to the invention is set up to control the cleaning-in-place cycle with the following steps:
The cleaning-in-place cycle is started when the need for cleaning-in-place is detected. This may be done in conventional manner for example as known from EP 2 985 069 B1. In intervals backwash cycles are carried out during this cleaning-in-place cycle. This is done without interrupting the cleaning-in-place cycle as described above with reference to the method. During these backwash cycles at least one backwash hydraulic parameter of the filter or membrane is detected or determined. The at least one backwash hydraulic parameter is a parameter which is characterizing the backwash flow and/or resulting from the backwash flow. The cleaning-in-place cycle is terminated by the control device if the determined backwash hydraulic parameter meets a certain, preferably predefined criterion. This may be a criterion indicating a sufficient cleaning result or a condition in which substantially no further improvement of the cleaning result can be achieved. By this an optimum cleaning result can be achieved without need of a too long duration of the cleaning-in-place cycle. Thus, the period of interruption of the production can be reduced. Furthermore, due to an increased production time the size of the filter device may be reduced for the same output.

The filter device comprises at least one sensor element which is connected to the control device and provided for detecting the at least one backwash hydraulic parameter or at least one value or variable on basis of which the backwash hydraulic parameter is determined. According to a first embodiment the at least one sensor element is a pressure sensor arranged to detect a transmembrane pressure, wherein two pressure sensors are provided, one on each side of the membrane to detect the transmembrane pressure.

According to a second embodiment the at least one sensor element may be a flow sensor arranged to detect the flow during the backwash cycle. Instead by use of a flow sensor the flow may be detected by a backwash pump producing the backwash flow. In the sense of the invention, therefore, also the backwash pump may be regarded as a flow sensor. Furthermore, preferably both the at least one pressure sensor and the at least one flow sensor are provided to detect the transmembrane pressure and the flow during the backwash cycle. According to a further option also a temperature sensor may be provided to regard the temperature in the system.

Preferably, the permeability of the membrane is calculated on basis of the measured values and regarded as the mentioned backwash hydraulic parameter.

As described above, a backwash pump is provided in the filter device. Said backwash pump is controlled by said control device. For example, a backwash flow provided by said backwash pump is set by said control device. According to a further possible embodiment the control device may ramp the flow during the backwash cycle from zero to a maximum and then back to zero. Between the ramps the flow may be kept constant for a certain time.

In the following the invention is described by way of example with reference to the accompanying figures. In this:
- Fig. 1: schematically shows a filter device according to the invention and
- Fig. 2: shows the change of membrane permeability during the cleaning in place cycle.

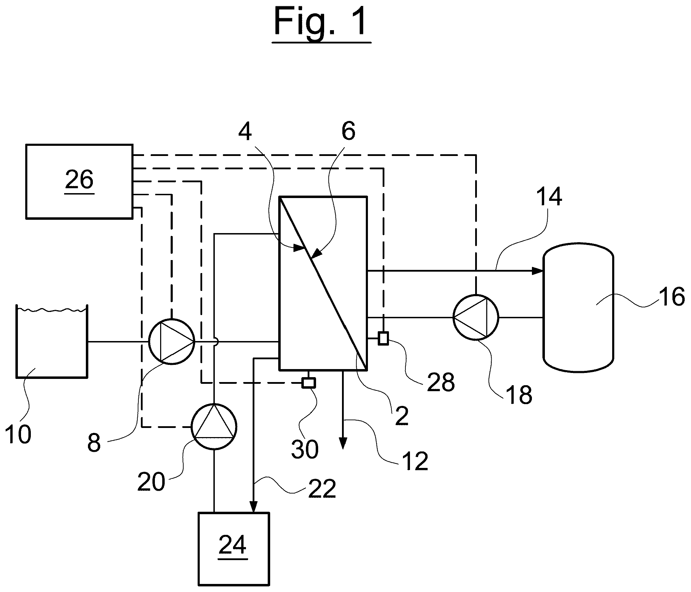

The filter device as shown in Fig. 1 comprises a membrane 2 having a feed side 4 and a filtrate or permeate side 6. For the filtering process there is provided a feed pump 8 arranged to feed raw water from a water source 10, for example a raw water tank or well to the feed side 4 of the membrane 2. The device as shown in Fig. 1 is provided for crossflow filtration. This means the feed pump 8 provides a feed flow along the entrance of feed side 4 of the membrane 2. The water is leaving the filter via a retentate outlet 12, for example to a drain. The permeate passing the membrane 2, i.e. the clean water is flowing out of the filter via a filtrate or permeate outlet 14 into a filtrate tank 16. The method according to the invention may, however, also be carried out analogously in dead-end-filtration.

The filter device as shown in Fig. 1, furthermore, is provided for carrying out a backwash. For backwashing there is provided a backwash pump 18 arranged to pump clean water from the filtrate tank 16 towards the permeate side 6 of the membrane 2. The clean water can pass the membrane 2 from the permeate side 6 to the feed side 4 and flowing out of the filter via the retentate outlet 12. Thus, by activating the backwash pump 18 the membrane 2 can be backwashed by the clean water produced before.

Additionally, the filter device shown in Fig. 1 is equipped with means for cleaning-in-place. The cleaning-in-place equipment comprises a cleaning-in-place pump 20 or CIP pump 20, respectively. The CIP pump 20 is connected to the feed side 4 of the membrane 2. The filter further comprises a cleaning-in-place or CIP outlet 22 connected to a cleaning-in-place tank or CIP tank 24. The suction side of the CIP pump is also connected to the CIP tank 24 so that a closed cleaning-in-place circuit is provided. The CIP pump 20 pumps a cleaning-in-place agent or solution from the CIP tank 24 into the filter arrangement such that the cleaning-in-place agent flows in a cross flow along the feed side 4 of the membrane 2 and, then, back to the CIP tank via the CIP outlet 22. Furthermore, there may be provided means for dosing cleaning-in-place agents or chemicals and/or means for heating the cleaning-in-place solution which are not shown in Fig. 1. The retentate outlet 12, preferably, is provided with a controllable valve by which the retentate outlet 12 is closed during the cleaning-in-place cycle.

The filter device furthermore comprises a control device 26. The control device 26 is connected to the CIP pump 20 and the backwash pump 18 and in this example also to the feed pump 8. The control device 26 controls the backwash pump 18, the CIP pump 20 and the feed pump 8, by switching the pumps on and off and, preferably, also speed regulation to ensure the desired flows and/or pressures on the outlet side of the respective pump. Furthermore, in the filter there are provided two pressure sensors 28 and 30 on both sides of the membrane 2, i.e. the pressure sensor28 is arranged on the permeate side 6 and the pressure sensor 30 is arranged on the feed side 4 of the membrane 2 such that by the pressure sensors 28 and 30 a transmembrane pressure TMP can be detected. Furthermore, in this example the backwash pump 18 detects the backwash flow, i.e. acts as a flow sensor. Instead of the flow detection by the backwash pump 18 there may be provided a separate flow sensor in the backwash line connecting the filtrate tank 16 and the permeate side 6 of the membrane 2.

During production the CIP pump 20 and the backwash pump 18 are switched off and the feed pump 8 feeds raw water 10 through the feed side 4 of the membrane 2 and the clean water passing through the membrane 2, i.e. the permeate flows into the filtrate tank 16 via the permeate outlet 14.

Over time, the membrane fouls and the hydraulic resistance increases. Thus, in intervals either a backwash, and/or a cleaning-in-place (CIP) is necessary to bring the performance back to the membrane. In a backwash cycle the membrane is flushed with produced water in reverse direction. In the cleaning-in-place cycle the membrane 2 is cleaned by a cleaning solution or agent in a cross flow on the feed side 4 as mentioned above. The need for such backwash or cleaning-in-place may be detected by the control device 26 in conventional manner, for example as known from EP 2 985 069 B1.

The method according to the invention now described by an example refers to the cleaning-in-place cycle. To start the cleaning-in-place cycle (CIP-cycle) the control device 26 switches off the feed pump 8 and starts the operation of the CIP pump 20. Furthermore, cleaning chemicals or agents are added into the CIP tank or the CIP circuit via a suitable dosing means, not shown in Fig. 1. According to the invention, in intervals simultaneously to the CIP-cycle a backwash cycle is started by switching on the backwash pump 18. The backwash pump 18 is activated by the control device 26 in predefined or varying intervals. Furthermore, the control device 26 may carry out a speed control of the backwash pump 18, for example to ramp up and down the backwash flow, and/or control a preheating of the cleaning-in-place fluid and/or control a valve at the retentate outlet 12.

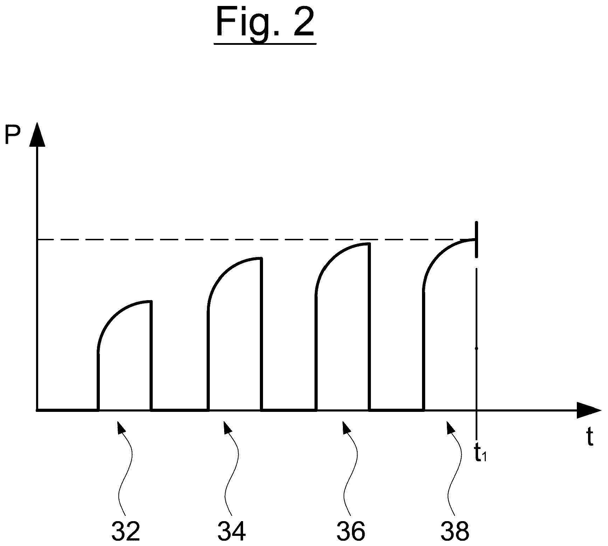

During these backwash cycles the transmembrane pressure is detected via the pressure sensors 28 and 30. Furthermore, the flow is detected via the backwash pump 18 itself. The control device 26 is provided to calculate a characteristic value on basis of those detected values, i.e. to calculate a backwash hydraulic parameter forming this characteristic value. In this example, this backwash hydraulic parameter is the permeability of the membrane. Alternatively, the backwash hydraulic parameter may for example be the hydraulic resistance of the membrane 2 or a characteristic value derived from the hydraulic resistance. Both, the hydraulic resistance or the permeability of the membrane, can be calculated by use of Darcy-law. For the Darcy equation also the surface of the membrane 2 and/or the temperature may be taken into consideration. The temperature may be detected by an additional temperature sensor connected to the control device 26. The surface size of the membrane 2 may be stored in the control device 26. Alternatively, for example a parameter reflecting the position of the pump's duty point can be calculated which does not require the knowledge of the membrane surface area. For each backwash cycle carried out during the CIP-cycle the respective backwash hydraulic parameter, i.e. preferably the permeability P of the membrane is detected or sampled. The backwash hydraulic parameter is sampled when the parameter has stabilized and the respective backwash cycle 32, 34, 36 and 38 is terminated. During the CIP-cycle 24 several backwash cycles are carried out and the detected values for the permeability P are compared as shown in Fig. 2.

In Fig. 2 the permeability P over time t is shown. Fig. 2 shows four backwash cycles 32, 34, 36 and 38 during a single CIP-cycle. As can be seen the four backwash cycles 32, 34, 36 and 38 are carried out in intervals. Between those backwash cycles 32, 34, 36 and 38 no permeability P is detected since the backwash pump 18 is switched off and no flow detection takes place. As can be seen for the backwash cycles 32, 34 and 36 the maximum of the permeability P determined during the respective backwash cycles increases. This shows that in this time a cleaning effect is achieved by the running CIP-cycle. In backwash cycle 38 no further increase of the permeability P can be detected, the permeability detected in the backwash cycles 36 and 38 is the same, i.e. the permeability stays constant. This shows that no further cleaning effect is achieved by the running CIP-cycle. If the control device 26 does not detect a further increase in permeability, the CIP-cycle is terminated, in this example at the point in time t1. Thus, an unnecessary long CIP-cycle can be avoided and the production can be started again by starting the feed pump 8.

According to the invention, the backwash cycle carried out simultaneously during the CIP-cycle is used to determine a characteristic backwash hydraulic parameter to monitor the cleaning result achieved by the CIP-cycle. Thus, according to the invention a real time measurement of the cleaning result by determining the backwash hydraulic parameter is possible and the CIP-cycle can be terminated if the maximum possible cleaning result is detected. The maximum possible cleaning result is achieved when no further increase of permeability can be detected or no further decrease of the hydraulic resistance can be detected, respectively. The method according to the invention, therefore, allows to speed up the CIP-cycle and at the same time to ensure the maximum possible cleaning result. By reducing the time for the CIP-cycle the production time can be increased allowing a smaller dimension of the entire filter device, resulting in reduced energy consumption and costs.

Furthermore, it is possible to detect further characteristic parameters being characteristic for the efficiency of the cleaning-in-place cycle during the cleaning-in-place cycle. In particular, the required time, energy consumption and/or consumption of chemicals for the cleaning-in-place cycle can be detected. This allows to optimize the cleaning-in-place cycles for example by adjusting or changing the recipes to find the most efficient recipe for the CIP-cycle. A recipe for the CIP-cycle may be defined by the composition of the CIP solution or agent and/or temperature of the cleaning-in-place fluid.

### List of reference numerals

- 2: membrane
- 4: feed side
- 6: permeate side
- 8: feed pump
- 10: raw water source
- 12: retentate outlet
- 14: permeate outlet
- 16: filtrate tank
- 18: backwash pump
- 20: cleaning-in-place pump, CIP pump
- 22: cleaning-in-place outlet, CIP outlet
- 24: cleaning-in-place tank, CIP tank
- 26: control device
- 28, 30: pressure sensors
- 32, 34, 36, 38: backwash cycles
- t1: point in time
- t: time
- P: permeability

## Claims

1. Cleaning-in-place method for cleaning a membrane filter system with the following steps:
starting a cleaning-in-place cycle for cleaning the filter (2) by operating a control device (26) to switch off a feed pump (8) and to start the operation of a cleaning-in-place pump (20), wherein the cleaning-in-place cycle is a chemical cleaning using at least one cleaning agent and the cleaning-in-place is carried out by a cleaning-in-place flow in form of a cross flow flowing along the entrance or feed side of the membrane, from the feed entry to the retentate outlet of the filter system, or vice versa,
for detecting the cleaning result, in intervals carrying out backwash cycles (32, 34, 36, 38) during this cleaning-in-place cycle and simultaneously with the cleaning in place cycle, wherein the backwash cycle is started by switching on a backwash pump (18) and wherein during these backwash cycles (32, 34, 36, 38) at least one backwash hydraulic parameter (P) of the filter (2) is determined in real time during the backwash operation, wherein the at least one backwash hydraulic parameter (P) is a parameter characterizing the permeability P of the membrane filter and the backwash hydraulic parameter (P) is determined at least on basis of the backwash flow detected by a flow sensor (18) during the backwash cycle and/or a transmembrane pressure (TMP) measured by two pressure sensors, one on each side of the membrane, during the backwash cycle (32, 34, 36, 38) in the membrane filter system, and
terminating the cleaning-in-place cycle, when the determined backwash hydraulic parameter (P) for the backwash cycles meets a certain criterion.

2. Cleaning in place method according to claim 1, in which for determining the backwash hydraulic parameter (P) a backwash variable is measured for a period of time and the backwash hydraulic parameter (P) is sampled when the parameter has stabilized.

3. Cleaning-in-place method according to claim 1 or 2, in which the cleaning-in-place cycle is terminated, if a deviation of a currently determined value of the backwash hydraulic parameter (P) from a value of the same backwash hydraulic parameter (P) determined in a previous backwash cycle (32, 34, 36 38) in the same cleaning-in-place cycle exceeds a predefined deviation limit value.

4. Cleaning-in-place method according to one of the preceding claims, in which during the backwash cycle (32, 34, 36, 38) the flow is ramped to a certain value and then ramped back to zero, wherein preferably the flow is maintained constant for a certain period before ramping back to zero.

5. Cleaning-in-place method according to one of the preceding claims, in which the intervals between two backwash cycles (32, 34, 36, 38) in the cleaning-in-place cycle are predefined.

6. Cleaning-in-place method according to one of the claims 1 to 4, in which the intervals between two backwash cycles (32, 34, 36, 38) in the cleaning-in-place cycle are variable and preferably are adjusted on basis of the change of the hydraulic parameter in previous backwash cycles during the cleaning-in-place cycle.

7. Cleaning-in-place method according to one of the preceding claims, in which several cleaning-in-place cycles are carried out with changing at least one setting of the cleaning-in-place recipe used in the cleaning-in-place cycles to determine the most economic recipe for the cleaning-in-place cycles.

8. Filter device including at least one membrane (2), a cleaning-in-place pump (20) and means for adding chemicals into a cleaning-in-place flow, and a backwash pump (18), wherein the filter device is equipped for backwashing the membrane (2) and for cleaning-in-place of the membrane (2) by a cleaning-in-place flow in form of a cross flow flowing along the entrance side of the membrane from the feed entry to the retentate outlet of the filter system, or vice versa, using at least one cleaning agent,
**characterized by**
a control device (26) controlling at least the cleaning-in-place and the backwash of the membrane (2), the control device (26) controlling the pumps for generating a predefined cleaning-in-place flow and backwash flow, and
at least one sensor element (28, 30) connected to the control device (26) and detecting at least one backwash hydraulic parameter (P) or at least one value (TMP) on basis of which the backwash hydraulic parameter (P) is determined, said at least one sensor element is a pressure sensor (28, 30), wherein two pressure sensors are provided, one on each side of the membrane, to detect a transmembrane pressure (TMP), and/or said at least one sensor element is a flow sensor (18) arranged to detect the backwash flow during the backwash cycle (32, 34, 36, 38),
wherein the control device (26) is set up to control a cleaning-in-place cycle with the following steps:
starting the cleaning-in-place cycle for cleaning the membrane (2) by switching off a feed pump (8) and starting the operation of the cleaning-in-place pump (20),
for detecting the cleaning result, in intervals carrying out a backwash cycle (32, 34, 36, 38) during this cleaning-in-place cycle and simultaneously with the cleaning in place cycle, wherein the backwash cycle is started by switching on the backwash pump (18), determining the at least one backwash hydraulic parameter (P) of the membrane (2) during the backwash cycle (32, 34, 36, 38) in real time during the backwash operation, and terminating the cleaning-in-place cycle, when the determined backwash hydraulic parameter (P) meets a certain criterion.

9. Filter device according to claim 8, **characterized in that** the backwash flow provided by said backwash pump (18) is set by said control device (26).

## Patentansprüche

1. Verfahren zur ortsgebundenen Reinigung zum Reinigen eines Membranfiltersystems mit den folgenden Schritten:
starten eines Zyklus zur ortsgebundenen Reinigung zum Reinigen des Filters (2) durch Betätigen einer Steuerungseinrichtung (26), um eine Beschickungspumpe (8) auszuschalten und um den Betrieb einer Pumpe (20) zur ortsgebundenen Reinigung zu starten, wobei der Zyklus zur ortsgebundenen Reinigung eine chemische Reinigung unter Verwendung mindestens eines Reinigungsmittels ist und die ortsgebundene Reinigung durch einen Strom zur ortsgebundenen Reinigung in Form eines Querstroms ausgeführt wird, der entlang der Eingangs- oder Beschickungsseite der Membran, von dem Beschickungseintritt bis zu dem Retentatauslass des Filtersystems oder umgekehrt, strömt,
zum Ermitteln des Reinigungsergebnisses in Intervallen Ausführen von Rückspülungszyklen (32, 34, 36, 38) während dieses Zyklus zur ortsgebundenen Reinigung und gleichzeitig mit dem Zyklus zur ortsgebundenen Reinigung, wobei der Rückspülungszyklus durch Einschalten einer Rückspülungspumpe (18) gestartet wird und wobei während dieser Rückspülungszyklen (32, 34, 36, 38) mindestens ein hydraulischer Rückspülungsparameter (P) des Filters (2) in Echtzeit während des Rückspülungsvorgangs bestimmt wird, wobei der mindestens eine hydraulische Rückspülungsparameter (P) ein Parameter ist, der die Durchlässigkeit P des Membranfilters kennzeichnet, und der hydraulische Rückspülungsparameter (P) zumindest auf Grundlage des Rückspülungsdurchflusses, der während des Rückspülungszyklus durch einen Durchflusssensor (18) ermittelt wird, und/oder eines Transmembrandrucks (TMP), der durch zwei Drucksensoren, einen auf jeder Seite der Membran, gemessen wird, während des Rückspülungszyklus (32, 34, 36, 38) in dem Membranfiltersystem bestimmt wird, und
beenden des Zyklus zur ortsgebundenen Reinigung, wenn der bestimmte hydraulische Rückspülungsparameter (P) für die Rückspülungszyklen ein bestimmtes Kriterium erfüllt.

2. Verfahren zur ortsgebundenen Reinigung nach Anspruch 1, wobei zum Bestimmen des hydraulischen Rückspülungsparameters (P) eine Rückspülungsvariable für einen Zeitraum gemessen wird und der hydraulische Rückspülungsparameter (P) abgefragt wird, wenn sich der Parameter stabilisiert hat.

3. Verfahren zur ortsgebundenen Reinigung nach Anspruch 1 oder 2, wobei der Zyklus zur ortsgebundenen Reinigung beendet wird, falls eine Abweichung eines gegenwärtig bestimmten Wertes des hydraulischen Rückspülungsparameters (P) von einem Wert desselben hydraulischen Rückspülungsparameters (P), der in einem vorhergehenden Rückspülungszyklus (32, 34, 36, 38) in demselben Zyklus zur ortsgebundenen Reinigung bestimmt wurde, einen vordefinierten Abweichungsgrenzwert überschreitet.

4. Verfahren zur ortsgebundenen Reinigung nach einem der vorhergehenden Ansprüche, wobei während des Rückspülungszyklus (32, 34, 36, 38) der Durchfluss bis zu einem bestimmten Wert hochgefahren und danach bis auf null zurückgefahren wird, wobei vorzugsweise der Durchfluss für einen bestimmten Zeitraum vor dem Zurückfahren bis auf null konstant gehalten wird.

5. Verfahren zur ortsgebundenen Reinigung nach einem der vorhergehenden Ansprüche, wobei die Intervalle zwischen zwei Rückspülungszyklen (32, 34, 36, 38) in dem Zyklus zur ortsgebundenen Reinigung vordefiniert sind.

6. Verfahren zur ortsgebundenen Reinigung nach einem der Ansprüche 1 bis 4, wobei die Intervalle zwischen zwei Rückspülungszyklen (32, 34, 36, 38) in dem Zyklus zur ortsgebundenen Reinigung veränderlich sind und vorzugsweise auf Grundlage der Veränderung des hydraulischen Parameters in vorhergehenden Rückspülungszyklen während des Zyklus zur ortsgebundenen Reinigung angepasst werden.

7. Verfahren zur ortsgebundenen Reinigung nach einem der vorhergehenden Ansprüche, wobei mehrere Zyklen zur ortsgebundenen Reinigung mit Verändern mindestens einer Einstellung der Rezeptur zur ortsgebundenen Reinigung, die in den Zyklen zur ortsgebundenen Reinigung verwendet wird, ausgeführt werden, um die wirtschaftlichste Rezeptur für die Zyklen zur ortsgebundenen Reinigung zu bestimmen.

8. Filtereinrichtung, die mindestens eine Membran (2), eine Pumpe (20) zur ortsgebundenen Reinigung und Mittel zum Hinzugeben von Chemikalien in einen Strom zur ortsgebundenen Reinigung und eine Rückspülungspumpe (18) einschließt, wobei die Filtereinrichtung zum Rückspülen der Membran (2) und zur ortsgebundenen Reinigung der Membran (2) durch einen Strom zur ortsgebundenen Reinigung in Form eines Querstroms ausgestattet ist, der entlang der Eingangsseite der Membran, von dem Beschickungseintritt bis zu dem Retentatauslass des Filtersystems oder umgekehrt, strömt,
**gekennzeichnet durch**
eine Steuerungseinrichtung (26), die zumindest die ortsgebundene Reinigung und die Rückspülung der Membran (2) steuert, wobei die Steuerungseinrichtung (26) die Pumpen zum Erzeugen eines vordefinierten Durchflusses zur ortsgebundenen Reinigung und eines Rückspülungsdurchflusses steuert, und
mindestens ein Sensorelement (28, 30), das mit der Steuerungseinrichtung (26) verbunden ist und mindestens einen hydraulischen Rückspülungsparameter (P) oder mindestens einen Wert (TMP), auf dessen Grundlage der hydraulischen Rückspülungsparameter (P) bestimmt wird, ermittelt, wobei das mindestens eine Sensorelement ein Drucksensor (28, 30) ist, wobei zwei Drucksensoren, einer auf jeder Seite der Membran, bereitgestellt werden, um einen Transmembrandruck (TMP) zu ermitteln, und/oder das mindestens eine Sensorelement ein Durchflusssensor (18) ist, der angeordnet ist, um den Rückspülungsdurchfluss während des Rückspülungszyklus (32, 34, 36, 38) zu ermitteln,
wobei die Steuerungseinrichtung (26) eingerichtet ist, um einen Zyklus zur ortsgebundenen Reinigung mit den folgenden Schritten zu steuern:
Starten des Zyklus zur ortsgebundenen Reinigung zum Reinigen der Membran (2) durch Ausschalten einer Beschickungspumpe (8) und Starten des Betriebs der Pumpe (20) zur ortsgebundenen Reinigung,
zum Ermitteln des Reinigungsergebnisses in Intervallen Ausführen eines Rückspülungszyklus (32, 34, 36, 38) während dieses Zyklus zur ortsgebundenen Reinigung und gleichzeitig mit dem Zyklus zur ortsgebundenen Reinigung, wobei der Rückspülungszyklus durch Einschalten der Rückspülungspumpe (18) gestartet wird, Bestimmen mindestens eines hydraulischen Rückspülungsparameters (P) der Membran (2) während des Rückspülungszyklus (32, 34, 36, 38) in Echtzeit während des Rückspülungszyklus und Beenden des Zyklus zur ortsgebundenen Reinigung, wenn der bestimmte hydraulische Rückspülungsparameter (P) ein bestimmtes Kriterium erfüllt.

9. Filtereinrichtung nach Anspruch 8, **dadurch gekennzeichnet, dass** der Rückspülungsdurchfluss, der durch die Rückspülungspumpe (18) bereitgestellt wird, durch die Steuerungseinrichtung (26) festgesetzt wird.

## Revendications

1. Procédé de nettoyage en place pour nettoyer un système de filtre à membrane avec les étapes suivantes :
le démarrage d'un cycle de nettoyage en place pour nettoyer le filtre (2) en actionnant un dispositif de commande (26) pour arrêter une pompe d'alimentation (8) et pour démarrer le fonctionnement d'une pompe de nettoyage en place (20), dans lequel le cycle de nettoyage en place est un nettoyage chimique à l'aide d'au moins un agent nettoyant et le nettoyage en place est réalisé par un écoulement de nettoyage en place sous forme d'un écoulement croisé s'écoulant le long du côté d'entrée ou d'alimentation de la membrane, depuis l'entrée d'alimentation jusqu'à la sortie de rétentat du système de filtre, ou vice versa, la détection du résultat de nettoyage, dans des intervalles de réalisation de cycles de lavage à contre-courant (32, 34, 36, 38) au cours de ce cycle de nettoyage en place et simultanément avec le cycle de nettoyage en place, dans lequel le cycle de lavage à contre-courant est démarré par la mise en marche d'une pompe de lavage à contre-courant (18) et dans lequel, pendant ces cycles de lavage à contre-courant (32, 34, 36, 38), au moins un paramètre hydraulique de lavage à contre-courant (P) du filtre (2) est déterminé en temps réel au cours de l'opération de lavage à contre-courant, dans lequel l'au moins un paramètre hydraulique de lavage à contre-courant (P) est un paramètre caractérisant la perméabilité P du filtre à membrane et le paramètre hydraulique de lavage à contre-courant (P) est déterminé au moins sur la base du débit de lavage à contre-courant détecté par un capteur de débit (18) au cours du cycle de lavage à contre-courant et/ou d'une pression transmembranaire (TMP) mesurée par deux capteurs de pression, un de chaque côté de la membrane, au cours du cycle de lavage à contre-courant (32, 34, 36, 38) dans le système de filtre à membrane, et
la terminaison du cycle de nettoyage en place, lorsque le paramètre hydraulique de lavage à contre-courant (P) déterminé pour les cycles de lavage à contre-courant remplit un certain critère.

2. Procédé de nettoyage en place selon la revendication 1, dans lequel, pour déterminer le paramètre hydraulique de lavage à contre-courant (P), une variable de lavage à contre-courant est mesurée pendant une période de temps et le paramètre hydraulique de lavage à contre-courant (P) est échantillonné lorsque le paramètre s'est stabilisé.

3. Procédé de nettoyage en place selon la revendication 1 ou 2, dans lequel le cycle de nettoyage en place est terminé si une différence entre une valeur actuellement déterminée du paramètre hydraulique de lavage à contre-courant (P) et une valeur du même paramètre hydraulique de lavage à contre-courant (P) déterminée dans un cycle de lavage à contre-courant (32, 34, 36, 38) précédent dans le même cycle de lavage en place dépasse une valeur limite de différence prédéfinie.

4. Procédé de nettoyage en place selon l'une des revendications précédentes, dans lequel, pendant le cycle de lavage à contre-courant (32, 34, 36, 38), le débit est augmenté à une certaine valeur puis remis à zéro, dans lequel de préférence le débit est maintenu constant pendant une certaine période après avoir été remis à zéro.

5. Procédé de nettoyage en place selon l'une des revendications précédentes, dans lequel les intervalles entre deux cycles de lavage à contre-courant (32, 34, 36, 38) dans le cycle de nettoyage en place sont prédéfinis.

6. Procédé de nettoyage en place selon l'une des revendications 1 à 4, dans lequel les intervalles entre deux cycles de lavage à contre-courant (32, 34, 36, 38) dans le cycle de nettoyage en place sont variables et de préférence sont ajustés sur la base de la variation du paramètre hydraulique dans des cycles de lavage à contre-courant précédents pendant le cycle de nettoyage en place.

7. Procédé de nettoyage en place selon l'une des revendications précédentes, dans lequel plusieurs cycles de nettoyage en place sont réalisés en changeant au moins un réglage de la recette de nettoyage en place utilisée dans les cycles de nettoyage en place pour déterminer la recette la plus économique pour les cycles de nettoyage en place.

8. Dispositif de filtre incluant au moins une membrane (2), une pompe de nettoyage en place (20) et des moyens pour ajouter des produits chimiques dans un écoulement de nettoyage en place, et une pompe de lavage à contre-courant (18), dans lequel le dispositif de filtre est équipé pour le lavage à contre-courant de la membrane (2) et pour le nettoyage en place de la membrane (2) par un écoulement de nettoyage en place sous forme d'un écoulement croisé s'écoulant le long du côté d'entrée de la membrane depuis l'entrée d'alimentation jusqu'à la sortie de rétentat du système de filtre, ou vice versa, à l'aide d'au moins un agent de nettoyage,
**caractérisé par**
un dispositif de commande (26) commandant au moins le nettoyage en place et le lavage à contre-courant de la membrane (2), le dispositif de commande (26) commandant les pompes pour générer un écoulement de nettoyage en place prédéfini et un écoulement de lavage à contre-courant prédéfini, et
au moins un élément capteur (28, 30) relié au dispositif de commande (26) et détectant au moins un paramètre hydraulique de lavage à contre-courant (P) ou au moins une valeur (TMP) sur la base de laquelle le paramètre hydraulique de lavage à contre-courant (P) est déterminé, ledit au moins un élément capteur est un capteur de pression (28, 30), dans lequel deux capteurs de pression sont prévus, un de chaque côté de la membrane, pour détecter une pression transmembranaire (TMP), et/ou ledit au moins un élément capteur est un capteur de débit (18) agencé pour détecter le débit de lavage à contre-courant pendant le cycle de lavage à contre-courant (32, 34, 36, 38),
dans lequel le dispositif de commande (26) est configuré pour commander un cycle de lavage en place avec les étapes suivantes :
le démarrage du cycle de nettoyage en place pour nettoyer la membrane (2) en arrêtant une pompe d'alimentation (8) et en démarrant le fonctionnement de la pompe de nettoyage en place (20),
la détection du résultat de nettoyage, dans des intervalles de réalisation d'un cycle de lavage à contre-courant (32, 34, 36, 38) au cours de ce cycle de nettoyage en place et simultanément avec le cycle de nettoyage en place, dans lequel le cycle de lavage à contre-courant est démarré par la mise en marche de la pompe de lavage à contre-courant (18),
la détermination de l'au moins un paramètre hydraulique de lavage à contre-courant (P) de la membrane (2) pendant le cycle de lavage à contre-courant (32, 34, 36, 38) en temps réel au cours de l'opération de lavage à contre-courant, et la terminaison du cycle de nettoyage en place, lorsque le paramètre hydraulique de lavage à contre-courant (P) déterminé remplit un certain critère.

9. Dispositif de filtre selon la revendication 8, **caractérisé en ce que** le débit de lavage à contre-courant fourni par ladite pompe de lavage à contre-courant (18) est réglé par ledit dispositif de commande (26).
